# EUROPÄISCHE PATENTANMELDUNG

(11) **EP 2 112 383 A2**
(43) Veröffentlichungstag der Anmeldung: **28.10.2009**
(21) Anmeldenummer: 09003579.1
(22) Anmeldetag: 12.03.2009
(51) Int. Cl.: F16B 13/06

(54) **Befestigungselement**

(30) Priorität: 25.04.2008 DE 102008020867
(71) Anmelder: fischerwerke GmbH & Co. KG, 72178 Waldachtal (DE)
(72) Erfinder: Mayer, Klaus, 72469 Meßstetten (DE)

(57) **Zusammenfassung**

Die Erfindung betrifft ein Befestigungselement (1), das einen Gewindebolzen (2), eine Konusmutter (3), eine Spreizhülse (4) und einen Einschraubkopf (13) mit Sollabreißstelle (14) aufweist, wobei die Konusmutter (3) auf den Gewindebolzen (2) aufgeschraubt ist. Zur Verbesserung des Befestigungselements (1) schlägt die Erfindung vor, dass die Konusmutter (3) mit dem Gewindebolzen (2) verliersicher verbunden ist.

## Beschreibung

Die Erfindung betrifft ein Befestigungselement mit den Merkmalen des Oberbegriffs des Anspruchs 1.

Ein derartiges Befestigungselement ist beispielsweise aus der Druckschrift DE 25 47 634 A1 bekannt. Das Befestigungselement weist einen Gewindebolzen, eine Konusmutter und eine Spreizhülse auf. Der Gewindebolzen ist beispielsweise eine Schraube oder ein Gewindestift mit Mutter. An den Gewindebolzen ist ein Einschraubkopf angeformt, der über eine Sollabreißstelle mit dem Gewindebolzen verbunden ist. Wird nun das Befestigungselement in einem Verankerungsgrund, beispielsweise Beton oder Mauerwerk, in ein Bohrloch eingebracht, so erfolgt die Befestigung, in dem ein Werkzeug am Einschraubkopf angesetzt und der Gewindebolzen so gedreht wird, dass sich die Konusmutter in Richtung der Spreizhülse bewegt. Die Konusmutter drückt Spreizelemente der Spreizhülse auseinander, die Spreizhülse verspreizt und wird gegen die Wand des Bohrlochs gedrückt. Sie ist dann ordnungsgemäß verspreizt, wenn auf den Gewindebolzen ein definiertes Drehmoment aufgebracht ist. Die Sollabreißstelle ist so ausgelegt, dass beim Erreichen des Drehmoments der Einschraubkopf vom Gewindebolzen abreißt. Um eine Demontage des Befestigungselements zu ermöglichen, weisen die in der genannten Druckschrift dargestellten Gewindebolzen ein weiteres Drehmitnahmemittel auf, dass nach Abreißen des Einschraubkopfes weiterhin am Gewindebolzen zur Demontage des Befestigungselements zur Verfügung steht. Die Demontage erfolgt, in dem die Konusmutter von den Gewindebolzen gelöst oder die Mutter vom Gewindestift gedreht wird Aus der Praxis sind darüber hinaus Befestigungselemente ohne ein weiteres Drehmitnahmemittel bekannt. Diese Befestigungselemente sind schwer zu demontieren. Sie dienen als Einbruch- und Diebstahlschutz, da sie verhindern, dass beispielsweise ein Befestigungselement an einem Geldautomat oder einem Fenstergittern mit einem Schraubenschlüssel oder ähnlichem auf einfache Weise entfernt werden kann. Nachteilig an diesen Befestigungselementen ist, dass sie grundsätzlich immer noch demontierbar sind, sofern der Anwender ein entsprechendes Drehmoment zum Lösen der Konusmutter auf den Gewindebolzen aufbringt. Je nach Ausführungsform reicht hierzu schon eine Zange aus, oder der Anwender bearbeitet den Gewindebolzen so, dass er ein Drehmitnahmemittel, beispielsweise einen Schlitz für einen Schraubenzieher, herstellt.

Aufgabe der Erfindung ist, ein Befestigungselement der genannten Gattung vorzuschlagen, dass die Möglichkeit eines besseren Schutzes gegen ungewollte Demontage bietet.

Diese Aufgabe wird erfindungsgemäß durch ein Befestigungselement mit den Merkmalen des Anspruchs 1 gelöst. Das erfindungsgemäße Befestigungselement, mit einem Gewindebolzen, einem Einschraubkopf mit Sollabreißstelle, einer Konusmutter die auf den Gewindebolzen aufgeschraubt ist und einer Spreizhülse, die mittels der Konusmutter aufspreizbar ist, ist derart ausgeführt, dass die Konusmutter mit dem Gewindebolzen verliersicher verbunden ist. Die Konusmutter ist durch das Gewinde über eine Drehbewegung entlang des Gewindebolzen bewegbar, so dass die Konusmutter zum Verspreizen in die Spreizhülse bewegt werden kann. Auf Grund der Verliersicherung ist es nicht möglich, dass die Konusmutter durch eine Drehbewegung in die entgegengesetzte Richtung von den Gewindebolzen abgeschraubt wird. Eine entsprechende Ausgestaltung des Befestigungselements kann beispielsweise dadurch erreicht werden, dass das in Einbringrichtung vordere Ende des Gewindebolzen nach der Montage der Konusmutter derart plastisch verformt wird, dass sein Außendurchmesser größer als der Innendurchmesser der Konusmutter ist. Der Gewindebolzen wird beispielsweise derart verstemmt, dass die Konusmutter verdrehbar aber verliersicher mit dem Gewindebolzen verbunden ist. Weiterhin ist es denkbar, das Gewinde des Gewindebolzen an seinem vorderen Ende planmäßig derart zu beschädigen, dass es nicht mehr gängig und die Konusmutter nicht mehr abschraubbar ist.

Vorzugsweise ist der Gewindebolzen als Schraube ausgeführt, so dass das Befestigungselement durch eine Drehbewegung des Gewindebolzen nicht mehr demontiert werden kann. Durch eine Drehbewegung lässt sich die Konusmutter möglicherweise aus der Spreizhülse hinaus bewegen, sie löst sich aber nicht mehr von der Schraube. Wird nun versucht, das Befestigungselement an der Schraube aus dem Bohrloch zu ziehen, wird die Konusmutter erneut in die Spreizhülse gezogen, wodurch sie wieder im Bohrloch verspreizt, und ein Herausziehen des Befestigungselements verhindert. Eine Demontage des erfindungsgemäßen Befestigungselements ist gegenüber dem bekannten Stand der Technik deutlich erschwert.

Bei einer weiteren bevorzugten Ausführungsform des erfindungsgemäßen Befestigungselements ist der Gewindebolzen als Gewindestift mit Mutter ausgeführt. Vorzugsweise ist die Mutter mit Einschraubkopf und Sollabreißstelle ausgebildet. Als Mutter kann insbesondere eine Hutmutter Verwendung finden. Der Begriff Mutter umfasst hierbei auch Elemente die mutterförmig, insbesondere mit einem Innengewinde, ausgebildet sind, aber kein weiteres Drehmitnahmemittel als den Einschraubkopf mit Sollabreißstelle aufweisen. Ein derartiges Befestigungselement ist grundsätzlich noch durch Lösen der Mutter vom Gewindestift demontierbar. Wird die Mutter entfernt, so lässt sich das mit dem Befestigungselement befestigte Anbauteil vom Gewindestift abnehmen. Wird nun in der Gewindestift mit der aufgeschraubt Konusmutter in das Bohrloch hinein gedrückt, kann die Hülse aus dem Bohrloch gezogen und nachfolgend der Gewindestift mit Konusmutter entfernt werden.

Um dem Anwender die Möglichkeit zu bieten, selbst zu entscheiden, ob das Befestigungselement nach dem Verspreizen der Spreizhülse im Bohrloch teilweise demontierbar ist oder nicht, ist eine weitere bevorzugte Ausführungsform des erfindungsgemäßen Befestigungselements derart gestaltet, dass der Gewindestift und die Mutter drehfest miteinander verbindbar sind. Der Anwender kann nun wählen, ob er den Gewindestift und die Mutter drehfest miteinander verbindet oder nicht. Wird der Gewindestift mit der Mutter drehfest verbunden, so wirkt der Gewindestift und die Mutter wie eine Schraube, und das Befestigungselement lässt sich nicht mehr durch ein einfaches Aufdrehen der Mutter demontieren.

Um dem Anwender eine anwenderfreundliche Möglichkeit zu bieten den Gewindestift und die Mutter drehfest miteinander zu verbinden, weist die Mutter vorzugsweise eine Verstemmöffnung auf. Die Verstemmöffnung befindet sich beispielsweise an der Mutter im Bereich ihres Innengewindes. Durch die Verstemmöffnung ist zudem ein Teil des Gewindes des Gewindestiftes zugänglich. Der Anwender kann nun mit einem Werkzeug, beispielsweise einem Stift und einem Hammer, das Gewinde des Gewindestiftes derart deformieren, dass die Mutter auf dem Gewinde des Gewindestiftes nicht mehr gängig und somit nicht mehr bewegbar ist. Die Mutter und der Gewindestift sind drehfest miteinander verbunden. Alternativ kann durch die Verstemmöffnung beispielsweise ein Klebstoff eingebracht werden, der eine drehfeste Verklebung von Mutter und Gewindestift herstellt.

Ohne den Erfindungsgedanken zu verlassen, ist es auch möglich, statt eines Gewindestift mit einer Mutter eine Schraube zu verwenden, wobei statt einer Verstemmöffnung ein Verstemmelement am in Einbringrichtung vorderen Ende der Schraube vorgesehen ist, mit dem eine Verliersicherung für die Konusmutter am Gewindebolzen geschaffen werden kann. Somit könnte der Anwender auch bei einer Ausführung mit einer Schraube als Gewindebolzen selbst bestimmen, ob das Befestigungselement nach dem Verspreizen der Spreizhülse im Bohrloch demontierbar ist oder nicht.

Die Erfindung wird nachfolgend anhand eines Ausführungsbeispiels näher erläutert.

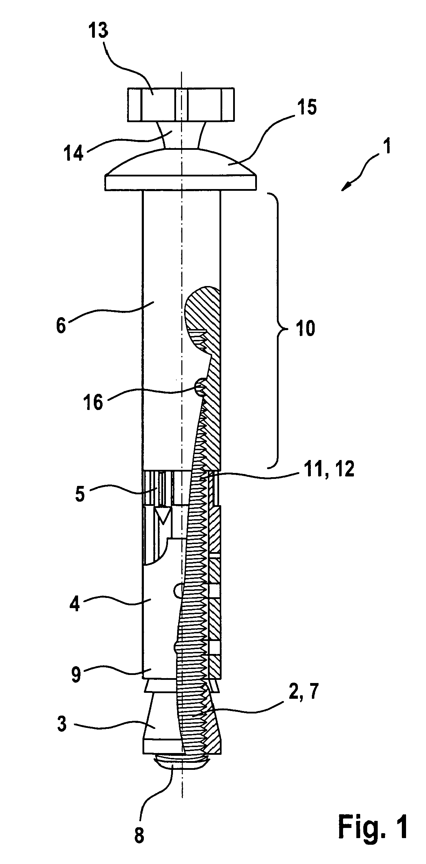

Figur 1 zeigt ein erfindungsgemäßes Befestigungselement 1, bestehend aus einem Gewindebolzen 2, einer Konusmutter 3, einer Spreizhülse 4, einer Ausgleichshülse 5, und einer Mutter 6. Der Gewindebolzen 2 ist als zylindrischer, lang gestreckter Gewindestift 7 ausgeführt. Die Längsachse des Gewindestiftes 7 liegt auf der Längsachse des Befestigungselements 1. An dem in Einbringrichtung vorderen Ende 8 des Gewindestiftes 7 ist die Konusmutter 3 aufgeschraubt. Das in Einbringrichtung vordere Ende 8 des Gewindestiftes 7 ist derart verstemmt, dass die Konusmutter 3 mit dem Gewindestift 7 drehbar und verliersicher verbunden ist. Die Konusmutter 3 weist an ihrem in Einbringrichtung vorderen Ende einen zylindrischen Teil auf, der sich zu ihrem hinteren Ende hin konisch verjüngt, sowie eine Bohrung mit Innengewinde in Richtung ihrer Längsachse, wobei das Innengewinde der Konusmutter 3 mit dem Außengewinde des Gewindestiftes 7 korrespondiert. Die Konusmutter 3 kann somit durch eine Drehbewegung in Richtung der Spreizhülse 4 bewegt werden. Eine Demontage der Konusmutter 3 über das vordere Ende 8 des Gewindestiftes 7 ist aber nicht möglich. Als weiteres Element des Befestigungselements 1 folgt entgegen der Einbringrichtung auf die Konusmutter 3 die Spreizhülse 4. Die Spreizhülse 4 weist einen zylindrischen Hohlquerschnitt auf, so dass sie den Gewindestift 7 umgreift Die Spreizhülse 4 ist von ihrem in Einbringrichtung vorderen Ende her in Längsrichtung zumindest teilweise geschlitzt und somit in Spreizsegmente 9 unterteilt. Die Spreizsegmente 9 sind an ihrem vorderen Ende in ihrer Materialdicke reduziert, was zu einem besseren Halt an der Wand eines nicht dargestellten Bohrlochs führt. Die Konusmutter 3 und der vordere Bereich der Spreizelemente 9 sind derart gestaltet, dass die Konusmutter 3 mit ihrem hinteren Ende innerhalb der Spreizelemente 9 liegt und an diesen anliegt. Wird nun die Konusmutter 3 durch eine Drehbewegung in Richtung der Spreizhülse 4 bewegt, so werden die Spreizelemente 9 durch die Konusmutter 3 aufgespreizt und gegen die Wand eines Bohrlochs gedrückt, wodurch das Befestigungselement 1 im Bohrloch verankert wird. An die Spreizhülse 4 schließt sich entgegen der Einbringrichtung die Ausgleichshülse 5 an. Die zylindrische Ausgleichshülse 5 umgreift ebenfalls den Gewindestift 7 und ist derart gestaltet, dass sie beim Aufbringen einer axialen Last stauchbar ist, wodurch so genannte Hohllagen des Befestigungselements 1 ausgeglichen werden können. Die Ausgleichshülse 5 besteht aus zwei kreisringförmigen Teilen, die durch einen Steg geringer Materialstärke entlang ihres Umfangs miteinander verbunden sind. Der Steg bricht unter Last ab, und die beiden kreisringförmigen Teile können ineinander geschoben werden. An seinem in Einbringrichtung hinteren Ende schließt das Befestigungselement 1 mit der Mutter 6 ab. Die Mutter 6 weist an ihrem hinteren Ende eine Einschraubkopf 13 auf, der als Außensechskant ausgeführt ist. An den Einschraubkopf 13 schließt sich in Längsrichtung ein Bereich mit reduziertem Durchmesser als Sollabreißstelle 14 an. Der in Längsrichtung nachfolgende Bund 15, der als Anlagefläche an ein nicht dargestelltes Anbauteil dient, ist kugelabschnittförmig ausgebildet, um einem Demontagewerkzeug, beispielsweise einer Zange, eine möglichst schlechte Angriffsfläche zu bieten. Die Mutter 6 ist insgesamt als eine Art Hutmutter ausgeführt. Sie weist einen zylindrischen Bereich 10 mit einer Bohrung 11 mit Innengewinde 12 auf, der sich in Einbringrichtung an den Bund 15 anschließt. In die Bohrung 11 ist der Gewindestift 7, dessen Außengewinde mit dem Innengewinde 12 der Bohrung 11 korrespondiert, vollständig eingeschraubt, so dass das hintere Ende des Gewindestiftes 7 an den Grund der Bohrung 11 stößt. Die Mutter 6 und der Gewindestift 7 sind hierdurch für eine Drehbewegung im Uhrzeigersinn drehfest miteinander verbunden.

Wird nun die Mutter 6 über den Einschraubkopf 13 im Uhrzeigersinn bewegt, so wird die Drehbewegung von der Mutter 6 auf den Gewindestift 7 übertragen und die Konusmutter 3 zur Spreizhülse 4 hin bewegt, die Spreizhülse 4 verspreizt und das Befestigungselement 1 im Bohrloch verankert. Beim Erreichen eines vorgesehenen Drehmoments, dass von einem Werkzeug auf den Einschraubkopf 13 übertragen wird, reißt der Einschraubkopf 13 an das Sollabreißstelle 14 von der Mutter 6 ab. Das Befestigungselement 1 ist planmäßig im Bohrloch verankert. Allerdings ist eine Demontage des Befestigungselements 1 immer noch möglich, indem die Hülse 6 gegen den Uhrzeigersinn gedreht und somit von den Gewindestift 7 gelöst wird. Um dies zu verhindern, ist es bei dem erfindungsgemäßen Befestigungselement 1 möglich, den Gewindestift 7 und die Mutter 6 drehfest miteinander zu verbinden. Die Mutter 6 weist hierzu eine Verstemmöffnung 16 auf. Die Verstemmöffnung 16 ist im zylindrischen Bereich 10 der Mutter 6 als radial verlaufende Öffnung ausgebildet. Die Verstemmöffnung 16 liegt im Bereich der Bohrung 11, so dass durch die Verstemmöffnung 16 der Gewindestift 7 erreichbar ist. Somit ist es möglich, ein Werkzeug, beispielsweise einen Stift, in die Verstemmöffnung 16 einzuführen und das Außengewinde des Gewindestiftes 7 bewusst zu beschädigen, so dass der Gewindestift 7 im Innengewinde 12 der Bohrung 11 nicht mehr gängig und somit mit ihm drehfest verbunden ist. Alternativ ist es möglich, in die Verstemmöffnung 16 beispielsweise Klebstoff einzuführen, um das Innengewinde 12 und das Außengewinde des Gewindestiftes 7 miteinander zu verkleben und somit eine drehfeste Verbindung zu schaffen. Somit kann durch eine Drehbewegung der Mutter 6 gegen den Uhrzeigersinn die Mutter in 6 nicht mehr vom Gewindestift 7 gelöst werden. Da die Konusmutter 3 ebenfalls verliersicher mit dem Gewindestift 7 verbunden ist, ist eine Demontage des Befestigungselements 1 durch einfaches Drehen nicht mehr möglich. Das erfindungsgemäßen Befestigungselement 1 ist hierdurch gegenüber dem bekannten Stand der Technik verbessert. Ein besonderer Vorteil bietet das erfindungsgemäße Befestigungselement 1 einem Anwender damit, dass der Anwender selbst vor der Montage des Befestigungselements 1 wählen kann, ob das Befestigungselement 1 demontierbar sein soll oder nicht.

### Befestigungselement

- 1: Befestigungselement
- 2: Gewindebolzen
- 3: Konusmutter
- 4: Spreizhülse
- 5: Ausgleichshülse
- 6: Mutter
- 7: Gewindestift
- 8: vorderes Ende des Gewindestiftes 7
- 9: Spreizsegment
- 10: zylindrischer Bereich der Mutter 6
- 11: Bohrung
- 12: Innengewinde
- 13: Einschraubkopf
- 14: Sollabreißstelle
- 15: Bund
- 16: Verstemmöffnung

## Patentansprüche

1. Befestigungselement (1), das einen Gewindebolzen (2), eine Konusmutter (3), eine Spreizhülse (4) und einen Einschraubkopf (13) mit Sollabreißstelle (14) aufweist, wobei die Konusmutter (3) auf den Gewindebolzen (2) aufgeschraubt ist, **dadurch gekennzeichnet, dass** die Konusmutter (3) mit dem Gewindebolzen (2) verliersicher verbunden ist.

2. Befestigungselement nach Anspruch 1, **dadurch gekennzeichnet, dass** der Gewindebolzen (2) als Schraube ausgeführt ist.

3. Befestigungselement nach Anspruch 1, **dadurch gekennzeichnet, dass** der Gewindebolzen (2) als Gewindestift (7) mit Mutter (6) ausgeführt ist.

4. Befestigungselement nach Anspruch 3, **dadurch gekennzeichnet, dass** die Mutter (6) mit Einschraubkopf (13) und Sollabreißstelle (14) ausgebildet ist.

5. Befestigungselement nach Anspruch einem der Ansprüche 3 oder 4, **dadurch gekennzeichnet, dass** der Gewindestift (7) und die Mutter (6) drehfest miteinander verbindbar sind.

6. Befestigungselement nach Anspruch 5, **dadurch gekennzeichnet, dass** die Mutter (6) eine Verstemmöffnung (16) aufweist.
